# EUROPÄISCHE PATENTSCHRIFT

(11) **EP 0 373 498 B1**
(45) Veröffentlichungstag und Bekanntmachung des Hinweises auf die Patenterteilung: **23.03.1994**
(21) Anmeldenummer: 89122527.8
(22) Anmeldetag: 06.12.1989
(51) Int. Cl.: H01R 13/436

(54) **Steckdose für eine mehrpolige Steckverbindung für den elektrischen Anschluss von Kraftfahrzeuganhängern**
Plug socket for a multipole plug connection for the electrical link-up of a motor vehicle trailer
Prise de courant pour une connexion multipolaire d'un raccordement électrique de remorque

(30) Priorität: 15.12.1988 DE 3842160; 19.04.1989 DE 3913054
(43) Veröffentlichungstag der Anmeldung: 20.06.1990
(73) Patentinhaber: Gebhard, Dietrich, D-76316 Malsch (DE)
(72) Erfinder: Wendel, Wolfgang, D-7500 Karlsruhe (DE)
(74) Vertreter: Witte, Alexander, Dr.-Ing.

(56) Entgegenhaltungen:
- FR-A- 1 547 023
- US-A- 3 573 720
- US-A- 4 113 333
- Deutsches Institut für Normung e.V. DIN V 72 570 Teil 1, Okt. 1988, Berlin, Elektrische Steckvorrichtungen zwischen Zug- und Anhängerfahrzeugen

## Beschreibung

Die Erfindung betrifft eine Steckdose für eine mehrpolige Steckverbindung für den elektrischen Anschluß von Kraftfahrzeuganhängern, mit einem Dosengehäuse und einem darin aufgenommenen Kontaktträger, der Öffnungen aufweist, in denen Kontakte dadurch unverlierbar aufgenommen sind, daß am Kontaktträger ein quer zur Einführrichtung der Kontakte bewegbarer Schieber vorgesehen ist, der in einer ersten, sperrenden Stellung die Kontakte unverlierbar am Kontaktträger hält, und der in einer zweiten Stellung die Kontakte freigibt, so daß diese aus den Öffnungen des Kontaktträgers herausgezogen oder in diese hineingeschoben werden können.

Eine derartige Steckdose ist aus der US-A-4 113 333 bekannt.

Bei dieser Steckdose ist in der stirnseitigen Fläche des Kontaktträgers, die dem Innenraum der Steckdose zugewandt ist, eine Ausnehmung vorgesehen, in die der bewegbare Schieber eingelegt ist. Der bewegbare Schieber ist dabei in der Ausnehmung zwischen einer ersten, sperrenden Stellung, in der die Kontakte unverlierbar am Kontaktträger gehalten werden, und einer zweiten Stellung verschiebbar, in der die Öffnungen im bewegbaren Schieber mit entsprechenden Öffnungen im Kontaktträger fluchten, so daß die Kontakte vom Kontaktträger abgezogen oder in diesen hineingeschoben werden können. Der bewegbare Schieber ragt dabei über die Kontur des Kontaktträgers nicht hinaus. Der Kontaktträger selbst ist der Innenkontur der Steckdose angepaßt, so daß der Kontaktträger samt bewegbarem Schieber und den darin aufgenommenen Kontakten bei der Montage der Steckdose in das Steckdosengehäuse passend sitzend eingebracht werden kann.

Nachteilig an dieser Steckdose ist, daß der Kontaktträger auch dann in den Innenraum der Steckdose eingeschoben werden kann, falls sich der bewegbare Schieber in seiner zweiten Stellung befindet, in der die Kontakte vom Kontaktträger abgezogen werden können. Es kann demzufolge vorkommen, daß der Kontaktträger in der Steckdose montiert wird, ohne daß sich der bewegbare Schieber in seiner zweiten sperrenden Stellung befindet. Demzufolge können sich die Kontakte von der Steckdose lösen, wobei dies beispielsweise bei dem Einsatz der Steckdose in Kraftfahrzeugen nach und nach durch die bei dem Betrieb des Kraftfahrzeugs auftretenden Erschütterungen der Fall sein kann.

Weitere Steckdosen mit bewegbaren Schiebern zum Sperren von in Kontaktträgern aufgenommenen Kontakten sind aus der FR-A-1 547 023 und der US-A-3 573 720 bekannt.

Eine weitere mehrpolige Steckdose, beispielsweise eine 13-polige Steckdose für eine Steckverbindung für den elektrischen Anschluß von Kraftfahrzeuganhängern, ist aus dem Dokument "Deutsches Institut für Normung e.V. DIN V 72 570 Teil 1, Oktober 1988, Berlin, Elektrische Steckvorrichtungen zwischen Zug- und Anhängerfahrzeugen" bekannt.

Eine solche Dose besteht aus einem im wesentlichen hohlen Dosengehäuse, das mit einem Deckel versehen ist. Der Deckel kann gegen die Kraft einer Feder geöffnet werden und er schließt sich aufgrund der Kraft dieser Feder selbsttätig. Im Dosengehäuse ist ein Kontaktträger aufgenommen, der, beispielsweise bei der Ausführung als 13-polige Seckdose, 13 Kontakte trägt. Der Kontaktträger ist dabei vom bodenseitigen Ende her in das Dosengehäuse einschiebbar und entgegen dieser Richtung wieder aus dem Dosengehäuse herausziehbar. Der Kontaktträger selbst ist zweiteilig ausgestaltet und die Kontakte sind über Schraubverbindungen mit dem Kontaktträger unverlierbar verbunden.

In der Automobilbranche ist es in vergangener Zeit üblich geworden, bereits serienmäßig Kraftfahrzeuge im Heckbereich mit einer Steckdose zu versehen. Bei einer 13- oder mehrpoligen Steckdose sind die Leiter zu einem Leiterstrang zusammengefaßt, der am dosenseitigen Ende mit dem Kontaktträger über die zuvor erwähnte Schraubverbindung verbunden ist. Der Kontaktträger stellt ein relativ steifes und sperriges Teil dar, das durch gebräuchliche Kabelkanäle in Kraftfahrzeugen nicht hindurch paßt.

Durch die immer strenger werdenden Vorschriften bezüglich der unabhängigen Stromversorgung von einzelnen Stromverbrauchern in Anhängern, wie beispielsweise unabhängige Stromversorgung von Bremsleuchten, Rückleuchten oder Nebenschlußleuchten, und durch das Vorsehen von immer mehr unabhängig voneinander betreibbaren Stromverbraucherstellen in Anhängern, wie Heizung, Beleuchtung, Kühlung, ist es notwendig geworden, nach und nach immer mehrpoligere Steckdosen bzw. dementsprechend mehradrige Leiterstränge samt den daran verbundenen Kontaktträger vorzusehen. So sind zur Zeit bereits 13-polige Steckdosen im Einsatz, eine 15-polige ist bereits in Erprobung, wobei zukünftige Entwicklungen in Richtung 17- oder 19-polige Ausführungen abzusehen sind.

Diese Tendenz in Richtung immer dicker werdenden Kabelsträngen samt den entsprechend großvolumigen Kontaktträgern läuft genau entgegen der allgemeinen Tendenz bei Kraftfahrzeugen, nämlich diese bei möglichst geringen Ausmaßen mit größtmöglichst großen Innenmaßen zu versehen. Großvolumige Kabeltunnel an der Unter- oder Innenseite der Karosserie würden entweder die Bodenfreiheit oder den Freiraum im Innenraum des Kraftfahrzeuges einschränken.

Eine Montagemöglichkeit besteht darin, den Leiterstrang samt den an einem Ende montierten Kontakten von der Innenseite eines Kraftfahrzeuges her durch die entsprechenden Kabelkanäle zu schieben, wonach dann die Kontakte an der rückwärtigen Seite des Fahrzeuges aus einer Öffnung heraustreten. Die umgekehrte Montageweise, also den Kabelstrang von Außenseite durch die rückwärtige Öffnung in der Karosserie zu verlegen, ist nahezu unmöglich, da der Kabelbaum, der sich von den niveaugleichen endseitigen Kontakten wegerstreckt, sehr viele, verschieden lange Verästelungen aufweist, je nachdem, mit welchem Bauelement diese Enden verbunden werden sollen.

Daher ist nur die zuerst erwähnte Arbeitsweise, d.h. die Verlegungsweise von der Innenseite her mit sinnvollem Zeitaufwand durchführbar. Bei dieser Montageweise müssen allerdings die Kontakte anschließend in den Kontaktträger eingeschoben und in diesem über eine Schraubverbindung fixiert werden. Bei einer 13-poligen Steckdose müßten dann 13 Schraubvorgänge durchgeführt werden. Dieser zeitraubende Vorgang würde bei einer Fließbandproduktion eine relativ lange Phase des Zusammenbaus eines Automobiles belegen, was sich auf die Gestehungskosten des Fahrzeuges niederschlagen würde. Ein weiteres Problem besteht darin, daß durch die Vielzahl der Kabeladern beim Anschließen an die Steckdose eine hohe Fehlanschlußmöglichkeit besteht. So ist es beispielsweise rein rechnerisch möglich, einen 13-adrigen Leiterstrang in ca. 6,3 Milliarden verschiedenen Möglichkeiten an eine 13-polige Steckdose anzuschließen. Es sind zwar schon Maßnahmen vorgeschlagen geworden, diese lagegerechte Bestückung des Kontaktträgers durch entsprechende Markierungen und Montagemerkmale zu vereinfachen, es kann jedoch nicht ausgeschlossen werden, daß dennoch eine Fehlmontage stattfindet. Wird dies bei einer nachfolgenden Überprüfung des korrekten Sitzes der Kontakte festgestellt, so muß die Schraubverbindung der entsprechenden Kontakte mit dem Kontaktträger gelöst werden, die fehlsitzenden Kontakte ausgetauscht und anschließend erneut die Schraubverbindung zwischen Kontaktträger und Kontakt hergestellt werden. Diese Vorgänge sind allesamt zeitaufwendig und daher kostenintensiv.

Aufgabe der vorliegenden Erfindung ist, eine Steckdose der eingangs genannten Art dahingehend zu verbessern, daß eine einfache und sichere Montage der Dose möglich ist, wobei unter sicherer Montage zu verstehen ist, daß sich die Kontakte der fertigmontierten Dose nicht lösen können.

Erfindungsgemäß wird die Aufgabe dadurch gelöst, daß der bewegbare Schieber derart der Innenkontur des Steckdosengehäuses angepaßt ist, daß ein Kontaktträger nur dann in die Steckdose einbringbar ist, falls sich der Schieber in seiner ersten, sperrenden Stellung befindet.

Durch die nunmehr vorgeschlagenen Maßnahmen ist sichergestellt, daß nur ein solcher Kontaktträger in den Innenraum einer Dose einbringbar ist, bei dem die Kontakte unverlierbar aufgenommen sind, das heißt, daß sich der Schieber in seiner sperrenden Stellung befindet. Es ist dann ausgeschlossen, daß einzelne Kontakte sich vom Kontaktträger lösen und eine fehlerhafte Montage der Steckdose erfolgt. Die Montageperson, die beim Einbringen des Kontaktträgers in den Innenraum der Steckdose vorher nicht geprüft hat, ob sich der Schieber in seiner sperrenden Stellung befindet, bemerkt dies spätestens zu diesem Zeitpunkt. Dieser Fehlsitz des Schiebers kann auch dann festgestellt werden, falls beispielsweise die Person, die den Kontaktträger in den Innenraum der Dose einbringen soll, nicht dieselbe Person ist, die den Kontaktträger mit den Kontakten verbindet, so daß ein Fehler an einer vorhergehenden Montagestation an einem Fließband noch von einer Montageperson in einem nachfolgenden Takt einfach bemerkt und auch rasch behoben werden kann. Auch diese Maßnahme trägt zur Lösung der Aufgabe der einfachen und raschen Montage bei.

In einer weiteren Ausgestaltung der Erfindung ist der Schieber derart der Innenkontur des Steckdosengehäuses angepaßt, daß der Kontaktträger im Innenraum der Dose durch den Schieber exakt positioniert ist.

Diese Maßnahme hat den Vorteil, daß nicht nur sichergestellt wird, daß der Kontaktträger nur in der sperrenden Stellung des Schiebers in den Innenraum des Dosengehäuses eingebracht werden kann, sondern es ist auch gleichzeitig sichergestellt, daß dies exakt positioniert stattfindet. In dieser Ausgestaltung übernimmt der Schieber noch eine Zentrierfunktion, so daß die bislang gebräuchlichen spinnenartigen Zentrierbeine am Kontaktträger entfallen können, da das jetzt durch den Schieber übernommen wird. Durch entsprechende Ausgestaltung derjenigen Bauteile, die über die Außenkontur des Kontaktträgers hinausreichen, also diejenigen Teile, die die Zentrierfunktion übernehmen, es ist dann möglich, durch optische Markierungen oder entsprechende Formgebung einer Bedienungsperson einfach den akkuraten, einzig möglichen Sitz anzuzeigen, wodurch wiederum die Montage der gesamten Steckdose erleichtert wird. Somit trägt auch diese Maßnahme zur Lösung der Aufgabe im Hinblick auf eine raschere Montage bei.

In einer weiteren vorteilhaften Ausgestaltung der Erfindung ist der Kontaktträger zweiteilig ausgebildet und zwischen den beiden Kontaktträgerteilen ist der Schieber querverschiebbar aufgenommen und gehalten.

Diese Maßnahme hat den Vorteil, daß die einzelnen Teile des Kontaktträgers aus spritztechnisch einfach herzustellenden Kunststoffspritzgußteilen bestehen und diese einfach zusammenzusetzen sind. Es können dann beispielsweise an den beiden Kontaktträgerteilen entsprechende Rastnasen vorgesehen sein, so daß sich die beiden Teile durch eine einfache Steckverbindung aneinanderfügen lassen, wobei dabei der ebenfalls als Einzelteil herstellbare Schieber gleichzeitig dazwischen aufgenommen und unverlierbar gehalten wird.

In einer weiteren vorteilhaften Ausgestaltung weist der Schieber eine Griffleiste auf, über die er von Hand quer verschiebbar ist.

Diese Maßnahme hat den Vorteil, daß der Schieber besonders einfach von einer Bedienungsperson von Hand zwischen seiner sperrenden und freigebenden Stellung hin und her bewegt werden kann.

In einer weiteren besonders bevorzugten Ausgestaltung der Erfindung weist der Schieber ein dem Lochbild des Kontaktträgers entsprechendes Lochbild an Öffnungen auf, die in der freigebenden Stellung des Schiebers mit den Öffnungen des Kontaktträgers fluchten, und daß in der zweiten sperrenden Stellung sichelförmige Bereiche des Schiebers in halsförmige, durchmessergeringere Abschnitte der Kontakte eingreifen und dadurch deren axiale Lage fixieren.

Diese Maßnahme hat den Vorteil, daß die Kontakte, die meist eine zylindrische Form aufweisen, sicher geführt in den Kontaktträger eingeschoben werden können, und daß durch ein anschließendes einfaches Querverschieben des Schiebers sichelförmige Bereiche desselben in die durchmessergeringeren Bereiche bzw. Hälse eingreifen und dadurch die axiale Fixierung sicherstellen. Diese konstruktiv äußerst einfache Ausgestaltung ermöglicht eine robuste Bauweise und somit auch ein relatives grobes Umgehen bei den Bestückungsvorgängen.

In einer weiteren besonders bevorzugten Ausgestaltung der Erfindung sind die halsförmigen Abschnitte der Kontakte zwischen einem Hülsenteil zur Aufnahme der Kontaktstifte eines in die Dose einzusteckenden Steckers und einem Leiteranschlußteil angeordnet, und der Schieber ist um den Differenzbetrag der Radien von Hülsenteil und halsförmigem Abschnitt quer verschiebbar im Kontaktträger angeordnet.

Diese Maßnahme hat den Vorteil, daß der sperrende Eingriff etwa in einem mittigen Bereich, in Längsrichtung des Kontaktes gesehen, stattfindet, wobei dann ein endseitiger hülsenförmiger Teil in einem ersten Teil des Kontaktträgers aufgenommen werden kann und ein auf der gegenüberliegenden Seite des halsförmigen Abschnittes angeordntes Leiteranschlußteil im zweiten Teil eines Kontaktträgers angeordnet sein kann. Damit ist ein über nahezu die gesamte Länge eines Kontaktes gut geführter Sitz eines Kontaktes im Kontaktträger gewährleistet.

Es versteht sich, daß die vorstehend genannten und die nachstehend noch zu erläuternden Merkmale nicht nur in der jeweils angegebenen Kombination, sondern auch in anderen Kombinationen und in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:
- Fig. 1: einen Längsschnitt eines Ausführungsbeispiels einer Steckdose, die an einer Außenseite einer Kfz-Karosserie befestigt ist;
- Fig. 2: eine Draufsicht eines Details einer erfindungsgemäßen Steckdose in Form eines quer verschiebbaren Schiebers;
- Fig. 3: einen Schnitt längs der Linie III-III in Fig. 2, wobei zwei verschiedene Kontakte in verschiedenen Stadien der Montage dargestellt sind;
- Fig. 4: einen Schnitt längs der Linie IV-IV in Fig. 1,
- Fig. 5: eine entsprechende Ansicht wie Fig. 4, jedoch in einer Stellung des Schiebers von Fig. 2, in der eine Montage in ein Steckdosengehäuse nicht möglich ist, und
- Fig. 6: einen Längsschnitt eines weiteren Ausführungsbeispiels einer erfindungsgemäßen Steckdose.

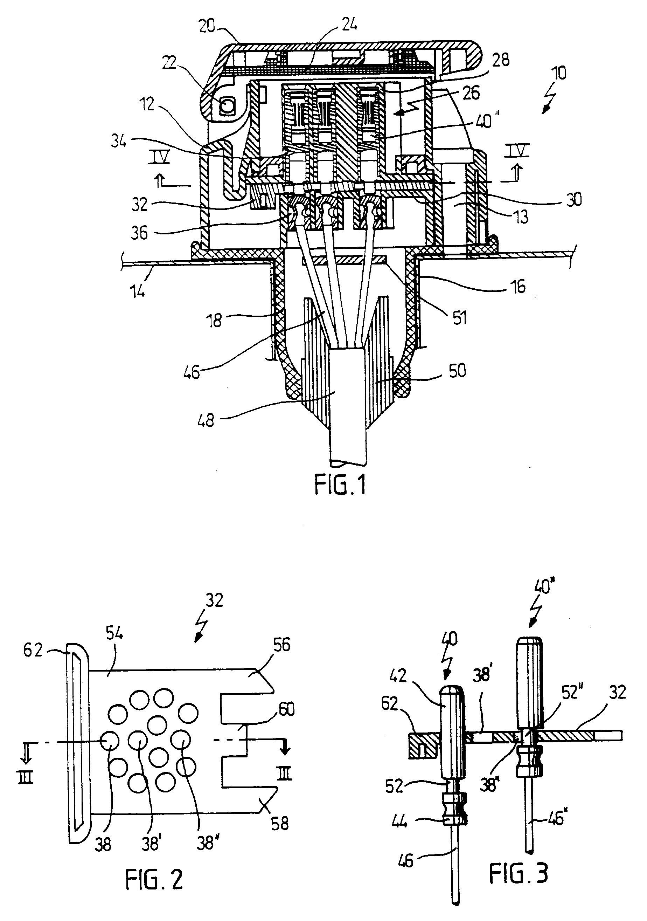

Eine in Fig. 1 bis 5 dargestellte Steckdose 10 weist ein Dosengehäuse 12 auf, das mit einem Deckel 20 versehen ist.

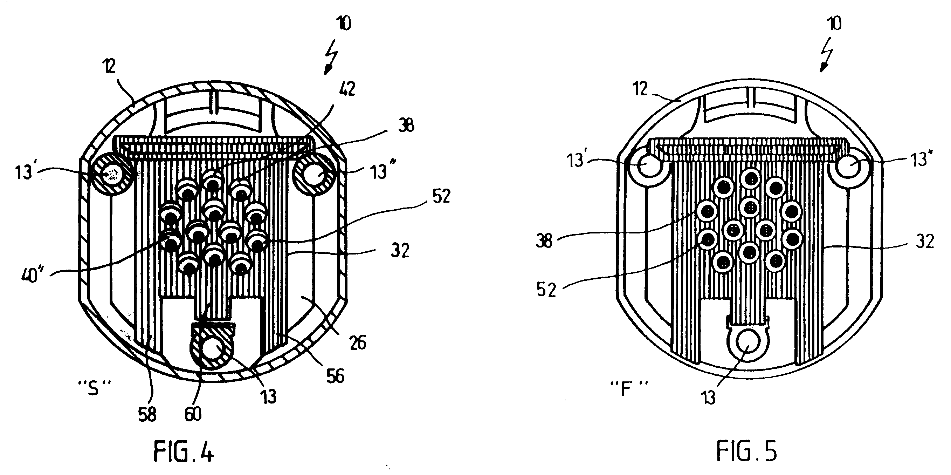

Das Steckdosengehäuse 12 ist mit drei umfänglich angeordneten Bohrungen 13, 13′, 13˝ versehen (siehe insbesondere Fig. 4 und 5), die zum Einführen von Schrauben vorgesehen sind, über die die Steckdose 10 an einem Grund, beispielsweise an einer Außenseite einer Karosserie 14 eines Kraftfahrzeuges angebracht werden kann.

Die Karosserie 14 ist mit einer Öffnung 16 versehen, aus der von der Innenseite der Karosserie her ein ein Bündel an Leitern 46 austritt.

In die Öffnung 16 in der Karosserie 14 ist eine Topfdichtung 18 eingelegt, auf der die Unterseite der Steckdose 10 ruht und die für eine Dichtung zwischen Karosserie 14 und Steckdose 10 sorgt.

Der Deckel 20 ist über ein Scharnier 22 mit dem Dosengehäuse 12 verbunden.

Der Deckel 20 kann gegen die Kraft einer nicht dargestellten Feder durch Verschwenken um das Scharnier 22 von der Oberseite des Dosengehäuses 12 abgehoben werden. Die Rückstellkraft der hier nicht dargestellten Feder sorgt dafür, daß sich der Deckel 20 selbsttätig schließt. Die Unterseite des Deckels 20 ist mit einer umlaufenden Dichtung 24 versehen, die dafür sorgt, daß ein dichtender Abschluß des Innenraums des Dosengehäuses 12 bei aufliegendem Deckel 20 gewährleistet ist.

Im Innenraum des Dosengehäuses 12 ist ein Kontaktträger 26 aufgenommen.

Der Kontaktträger 26 weist in der Darstellung von Fig. 1 ein oberes Teil 28, ein unteres Teil 30, und ein zwischen diesen beiden Teilen 28 und 30 aufgenommenen Schieber 32 auf.

Das obere Teil 28 weist eine etwa zylindrische Form auf und enthält dreizehn, in der Darstellung von Fig. 1 vertikal verlaufende kreisrunde Öffnungen 34 auf.

Das untere Teil 30 des Kontaktträgers 26 weist ebenfalls dreizehn Öffnungen 36 auf, die derart angeordnet sind, daß sie bei aneinandergefügtem oberen und unteren Teil 28 bzw. 30 mit den Öffnungen 34 fluchten.

Die beiden Teile 28 und 30 des Kontaktträgers 26 sind aus Kunststoffspritzgußteilen hergestellt und über eine hier nicht näher dargestellte Verrastung miteinander verbunden.

Der zwischen den beiden Teilen 28 und 30 aufgenommene Schieber 32, der in Fig. 2 alleinig dargestellt ist, weist ebenfalls dreizehn Öffnungen 38, 38′, 38˝ .... auf, deren Durchmesser und Anordnung, d.h. also im Lochbild, den Öffnungen 34 bzw. 36 entsprechen. Die Anordnung ist dabei derart, daß neun auf einem Umfangskreis liegende Öffnungen 38 vier innere Öffnungen umschließen.

Der Schieber 32 weist einen etwa rechteckförmigen, plattenförmigen Grundkörper 54 auf, in dem die Öffnungen 38, 38′, 38˝ .... ausgespart sind. Der plattenförmige Grundkörper 54 ist dann in einer entsprechenden Aussparung zwischen dem oberen and unteren Teil 28 bzw. 30 aufgenommen. Auf der in der Darstellung von Fig. 1 und 2 linken bzw. in der Darstellung von Fig. 4 und 5 oberen Seite, ist der Grundkörper 54 mit einer querverlaufenden Griffleiste 62 versehen, die beidseitig den Grundkörper 54 überragt.

Auf der der Griffleiste 62 gegenüberliegenden Seite springen vom Grundkörper 54 randseitig zwei Zungen 56 bzw. 58 und zwischen diesen eine Nase 60 vor.

Der Durchmesser der Öffnungen 34 bzw. 36 im oberen bzw. unteren Teil 28 bzw. 30 des Kontaktträgers 26 sowie der Durchmesser der Öffnungen 38 im Schieber 32, sind gleich und derart, daß gerade passend, mit geringem seitlichen Spiel Kontakte 40, 40˝ durch diese Öffnungen 34, 36 bzw. 38 hindurchgeschoben werden können.

Jeder Kontakt 40 (siehe insbesondere Fig. 1 und 3, wobei in Fig. 3 gegenüber der Darstellung von Fig. 1 eine vereinfachte stilisierte Darstellung gewählt wurde), weist endseitig ein hohlzylindrisches Hülsenteil 42 auf, das dazu dient, Kontaktstifte eines in die Dose 10 einzusteckenden Steckers aufzunehmen. Der Außendurchmesser der Hülsenteile 42 entspricht etwa dem Innendurchmesser der Öffnungen 34, 36 und 38.

Das Hülsenteil 42 geht in einen halsförmigen Abschnitt 52 mit geringerem Durchmesser über, dessen axiale Länge in etwa der Materialdicke des Schiebers 32 entspricht. Anschließend an den halsförmigen Abschnitt 52 setzt sich der Kontakt 40 in einem Leiteranschlußteil 44 fort. Im Leiteranschlußteil 44 ist ein Leiter 46 aufgenommen, der beispielsweise in der Darstellung von Fig. 1 und 3 über ein Verlöten mit dem Leiteranschlußteil 44 verbunden ist.

Die Leiter 46 der dreizehn Kontakte laufen in einen Schlauch 48, der an der Austrittsseite der Leiter 46 von einem Stopfen 50 umgeben ist. Der Stopfen 50 steht in Eingriff mit einer Halskrause der Topfdichtung 18, so daß ein axial unverrückbarer Sitz des Stopfens 50 gewährleistet ist.

Zwischen Stopfen 50 und Leiteranschlußteilen 44 ist eine Sortierscheibe 51 vorgesehen, die dafür sorgt, daß die dreizehn Leiter 46 entsprechend dem in Fig. 2 zu erkennenden Lochbild relativ zueinander fixiert sind. Dadurch kann die relative Lage der Leiter 46 bei der Montage nicht verändert werden.

Bei der Montage der Kontakte 40, 40˝ im Kontaktträger 26, wobei dieser sich außerhalb des Innenraums des Steckdosengehäuses 12 befindet, ist der Schieber 32 derart quer verschoben, daß dessen Öffnungen 38, 38′, 38˝ mit den Öffnungen 34 bzw. 36 des oberen bzw. unteren Teils 28 bzw. 30 fluchten.

In dieser Stellung kann dann ein Kontakt 40, wie dies in Fig. 3 auf der linken Seite dargestellt ist, von unten in den Kontaktträger 26 eingeschoben werden (in Fig. 3 ist der Übersicht halber das überhalb des Schiebers 32 angordnete Teil 28 bzw. das unterhalb des Schiebers 32 angeordnete Teil 30 weggelassen).

Ist ein Kontakt 40 vollkommen in den Kontaktträger 26 eingeschoben, wobei eine Stirnseite des Hülsenteils 42 an einen inneren Ringflansch des oberen Teils 28 stößt, befindet sich der halsförmige Abschnitt 52 eines Kontaktes 40˝ auf Höhe einer Öffnung 38 im Schieber 32. Haben alle Kontakte 40, 40˝ diese Position eingenommen, so wird der Schieber 32 relativ zu den beiden Teilen 28 bzw. 30 des Kontaktträgers 26 querverschoben, so daß ein sichelförmiger Bereich in den durch den halsförmigen Abschnitt 52 geschaffenen Raum zwischen Hülsenteil 42 und Leiteranschlußteil 44 eingreifen kann, wie dies in Fig. 3 auf der rechten Seite anhand des Kontaktes 40˝ dargestellt ist.

Ein solcher Kontakt 40˝ ist dann in axialer Richtung mit geringem Spiel fixiert im Kontaktträger 26 aufgenommen, wie dies beispielsweise aus Fig. 1 zu erkennen ist.

In dieser sperrenden Stellung "S" des Schiebers 32, wie sie auch aus Fig. 4 zu entnehmen ist, kann der Kontaktträger 26 gerade passend von unten in das Steckdosengehäuse 12 eingeschoben werden. Die über den Grundkörper 54 des Schiebers 32 seitlich vorstehenden Bereiche der Griffleiste 62 schmiegen sich dabei teilweise um die Außenkontur der hohlzylindrischen Materialbereiche, die die Öffnungen 13′ und 13˝ umrunden.

Die gegenüberliegenden äußeren Enden der Zungen 56 bzw. 58 liegen an der Innenseite des Dosengehäuses passend an, d.h. deren Außenkontur ist jeweils dem entsprechenden Bereich der Innenseite des Gehäuses 12 angepaßt.

Die Stirnseite der Nase 60 liegt an einem entsprechenden Bereich der Bohrung 13 an.

Ausschließlich in dieser sperrenden Stellung "S" des Schiebers 32 kann ein Kontaktträger 26 überhaupt von der Unterseite in das Dosengehäuse eingeschoben werden.

Die Kontakte 40 sind dabei unverlierbar im Kontaktträger 26 aufgenommen, und dieser ist wiederum exakt positioniert und in radialer Richtung unverdrehbar im Innengehäuse der Steckdose 10 aufgenommen, so daß ein exakter Paßsitz gewährleistet ist.

Der Kontaktträger 26 kann aber auch wieder einfach vom Innenraum des Gehäuses 12 abgezogen werden, indem lediglich die Schraubverbindung zwischen Dosengehäuse 12 und Karosserie 14 gelöst wird und das Dosengehäuse 12 abgezogen wird.

In Fig. 5 ist der Versuch dargestellt, einen Kontaktträger 26 in den Innenraum des Gehäuses 12 einzuschieben, bei dem sich der Schieber 32 in seiner freigebenden Stellung "F" befindet, in der die Öffnungen 34, 36 und 38 fluchten, die Kontakte 40 also noch vom Kontaktträger 26 abgezogen werden könnten.

Es gelingt nicht, den Kontaktträger 26 in den Innenraum des Gehäuses 10 vollständig anzubringen, da der Schieber 32 in der Stellung "F" an die Unterkante des Dosengehäuses 12 unter anderem im Bereich der Bohrungen 13, 13′ und 13˝ stößt.

In der Darstellung von Fig. 5 muß der Schieber 32 zunächst relativ zu den Teilen 28 bzw. 30 des Kontaktträgers 26 nach oben verschoben werden, bis dieser die in Fig. 4 dargestellte Stellung einnimmt. Der Verschiebeweg entspricht dabei der Differenz der Radien von Hülsenteil 42 und halsförmigen Abschnitt 52 eines Kontaktes 40.

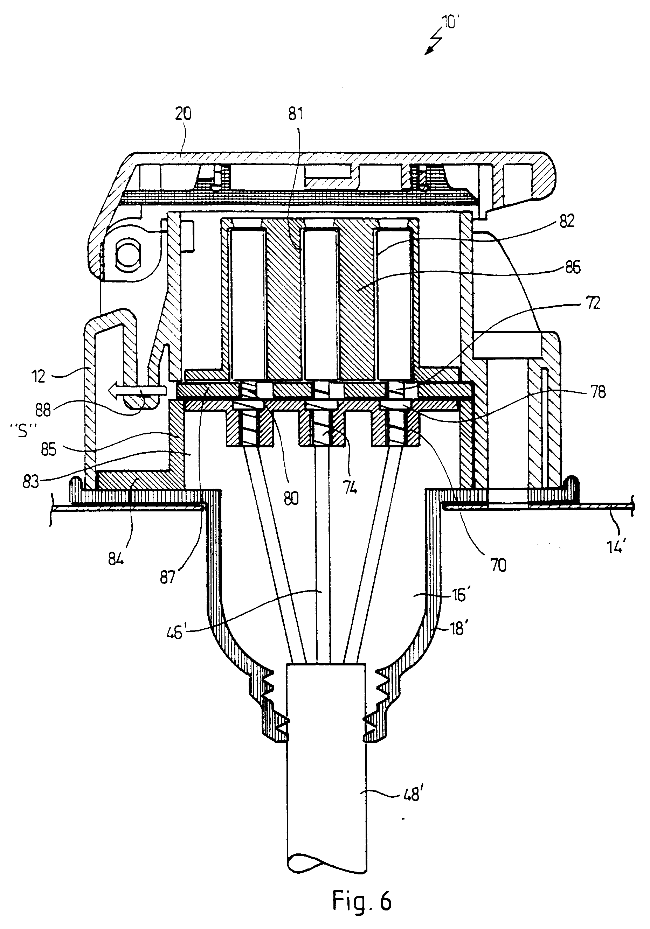

In Fig. 6 ist ein weiteres Ausführungsbeispiel einer erfindungsgemäßen Steckdose 10′ dargestellt.

Die Steckdose 10′ weist gleichermaßen wie die in Zusammenhang mit Fig. 1 beschriebene Steckdose 10 ein Gehäuse 12 und ein damit verbundener Deckel 20 auf. Die Steckdose 10′ ruht ebenfalls auf einer Topfdichtung 18′, die in einer Öffnung 16′ in einer Fahrzeugkarosserie 14′ aufgenommen ist bzw. diese auch teilweise umrundet.

Im Innenraum der Steckdose 10′ ist ein Kontaktträger 84 aufgenommen, der einen zylindrischen Körper 86 aufweist, der sich in einer solchen axialen Länge erstreckt, daß in seinen axialen Öffnungen 81 die gesamten Hülsenteile 82 von Kontakten 72 aufgenommen sind. In der Schnittdarstellung von Fig. 6 sind die Kontakte 72 bzw. deren Hülsenteile 82 der Übersicht halber nur schematisch angedeutet.

Der zylindrische Körper 86 des Kontaktträgers 84 geht über einen scheibenförmigen, in der Darstellung von Fig. 6, horizontal verschiebbaren Schieber 87 in ein Fußteil 85 über.

Das Fußteil 85 umgrenzt einen hohlzylindrischen Innenraum 83, in dem ein biegsames Element 70 aufgenommen ist, das bündig am Kontaktträger 84 liegt und zwar an der Unterseite des scheibenförmigen Schiebers 87.

In der in Fig. 6 dargestellten Position befindet sich der Schieber 87 in seiner sperrenden Stellung "S", d.h., er ist, wie zuvor beschrieben, derart verschoben, daß er am Hals 80 der Kontakte 72 liegt. Der Durchmesser des Halses 80 ist geringer als der Durchmesser des auf der einen Seite anschließenden Hülsenteiles 82 des Kontaktes 72 bzw. geringer als ein auf der gegenüberliegenden Seite anschließender Ringflansch 78 eines jeden Leiteranschlußteiles 74. Die Leiteranschlußteile 74 der Kontakte 72 sind mit Leiter 46′ verbunden, die in einem Schlauch 48′ zusammengeführt werden, der vom offenen inneren Ende der Topfdichtung 18′ dichtend umgriffen ist.

In der in Fig. 6 dargestellten sperrenden Stellung "S" des Schiebers 87 ist sichergestellt, daß die Kontakte 72 axial unverrückbar im Kontaktträger 34 aufgenommen sind.

Beim Demontieren der Steckdose 10′ wird durch Abnehmen des Gehäuses 12 der gesamte Zusammenbau aus Kontaktträger 34 und elastischem Element 70 samt darin aufgenommenen Kontakten 72 vom Innenraum der Steckdose 10′ entfernt. Anschließend wird der Schieber 87, entsprechend der Darstellung von Fig. 6, nach links verschoben, wie dies durch einen Pfeil 88 angedeutet ist. Die Verschiebung erfolgt dabei derart, daß die entsprechenden Öffnungen im Schieber 87 koaxial zu den Öffnungen 81 im zylindrischen Körper 86 des Kontaktträgers 84 sind, in denen die Hülsenteile 82 der Kontakte 72 aufgenommen sind. In dieser freigebenden Stellung "F" des Schiebers 87 kann das Element 70 samt den darin aufgenommenen Kontakten 72 vom Kontaktträger 84 abgezogen werden.

Das biegsame Element 70 dient gleichermaßen wie die in Zusammenhang mit Fig. 1 beschriebene Sortierscheibe 51 zur lagegerechten Anordnung der dreizehn Kontakte 46′ relativ zueinander. Bei abgezogenem Element 70 ist es dann möglich, fehlerhafte oder falsch sitzende Kontakte 72 auszutauschen.

Bei der Montage der Steckdose 10′ findet der umgekehrte Vorgang statt, d.h., das elastische Element 70 wird samt den darauf aufgenommenen Kontakten 72 in den Kontaktträger 84 eingeschoben, wobei sich der Schieber 87 in seiner freigebenden Stellung "F" begibt. Durch ein bestimmtes Lochbild des Elements 70, das dem in Fig. 4 bzw. 5 dargestellten Lochbild entspricht, ist es dann möglich, auch ohne große Aufmerksamkeit die dreizehn Kontakte an die richtigen Stellen im Kontaktträger 84 einzuschieben. Nach dem Einschieben des Elements 70 in den Kontaktträger, wird der Schieber 87 in seine sperrende Stellung "S" geschoben, wie dies in Fig. 6 dargestellt ist und der Zusammenbau in den Innenraum der Steckdose 10′ eingeschoben bzw. diese auf den Zusammenbau aufgeschoben.

## Patentansprüche

1. Steckdose für eine mehrpolige Steckverbindung für den elektrischen Anschluß von Kraftfahrzeuganhängern, mit einem Dosengehäuse (12) und einem darin aufgenommenen Kontaktträger (26, 84), der Öffnungen (34, 36, 38, 81) aufweist, in denen Kontakte (40, 40'', 72) dadurch unverlierbar aufgenommen sind, daß am Kontaktträger (26, 84) ein quer zur Einführrichtung der Kontakte (40, 40'', 72) bewegbarer Schieber (32, 87) vorgesehen ist, der in einer ersten, sperrenden Stellung (S) die Kontakte (40, 40'', 72) unverlierbar am Kontaktträger (26, 84) hält, und der in einer zweiten Stellung (F) die Kontakte (40, 40'', 72) freigibt, so daß diese aus den Öffnungen (34, 36, 38) des Kontaktträgers (26, 84) herausgezogen oder in diese hineingeschoben werden können, dadurch gekennzeichnet, daß der Schieber (32) derart der Innenkontur des Steckdosengehäuses (12) angepaßt ist, daß ein Kontaktträger (26) nur dann in die Steckdose (10) einbringbar ist, falls sich der Schieber (32) in seiner ersten, sperrenden Stellung (S) befindet.

2. Steckdose nach Anspruch 1, dadurch gekennzeichnet, daß der Schieber (32) derart der Innenkontur des Steckdosengehäuses (12) angepaßt ist, daß der Kontaktträger (26) im Innenraum der Dose (10) durch den Schieber (32) exakt positioniert ist.

3. Steckdose nach Anspruch 1 oder 2, dadurch gekennzeichnet, daß der Kontaktträger (26, 84) zweiteilig ausgebildet ist, und daß zwischen den beiden Kontaktträgerteilen (28, 30; 86, 85) der Schieber (32, 87) querverschiebbar aufgenommen und gehalten ist.

4. Steckdose nach einem der Ansprüche 1 bis 3, dadurch gekennzeichnet, daß der Schieber (32) eine Griffleiste (62) aufweist, über die er von Hand querverschiebbar ist.

5. Steckdose nach einem der Ansprüche 1 bis 4, dadurch gekennzeichnet, daß der Schieber (32, 87) ein dem Lochbild des Kontaktträgers (26, 84) entsprechendes Lochbild an Öffnungen (38, 38', 38'') aufweist, die in der freigebenden Stellung (F) des Schiebers (32, 87) mit den Öffnungen (34, 36) des Kontaktträgers (26, 84) fluchten, und daß in der ersten, sperrenden Stellung (S) sichelförmige Bereiche des Schiebers (32, 87) in halsförmige, durchmessergeringere Abschnitte (52, 52', 80) der Kontakte (40, 40'', 72) eingreifen und dadurch deren axiale Lage fixieren.

6. Steckdose nach Anspruch 5, dadurch gekennzeichnet, daß der halsförmige Abschnitt (52, 52'', 80) jedes Kontaktes (40, 40'', 72) zwischen einem Hülsenteil (42, 82) zur Aufnahme der Kontaktstifte eines in die Dose (10, 10') einzusteckenden Steckers und einem Leiteranschlußteil (44, 74) angeordnet sind, und daß der Schieber (32, 87) um den Differenzbetrag der Radien von Hülsenteil (42, 82) und halsförmigem Abschnitt (52, 82', 80) querverschiebbar im Kontaktträger (26) angeordnet ist.

## Claims

1. Socket for a multiple plug connection for the electrical connection of motor vehicle trailers, having a socket housing (12) and a contact carrier (26, 84) which is accommodated therein and has openings (34, 36, 38, 81), in which contacts (40, 40'', 72) are captively accommodated by there being provided on the contact carrier (26, 84) a slide (32, 87) which is movable transversely to the inserting direction of the contacts (40, 40'', 72) and, in a first, blocking position (S), holds the contacts (40, 40'', 72) captively on the contact carrier (26, 84) and which, in a second position (F), releases the contacts (40, 40'', 72), so that the latter can be withdrawn from the openings (34, 36, 38) of the contact carrier (26, 84) or pushed into them, characterized in that the slide (32) is adapted to the inner contour of the socket housing (12) in such a way that a contact carrier (26) can be introduced into the socket (10) only if the slide (32) is in its first, blocking position (S).

2. Socket according to Claim 1, characterized in that the slide (32) is adapted to the inner contour of the socket housing (12) in such a way that the contact carrier (26) is exactly positioned in the interior of the socket (10) by the slide (32).

3. Socket according to Claim 1 or 2, characterized in that the contact carrier (26, 84) is of a two-part design, and in that the slide (32, 87) is accommodated and held transversely displaceably between the two contact carrier parts (28, 30; 86, 85).

4. Socket according to one of Claims 1 to 3, characterized in that the slide (32) has a gripping strip (62), by means of which it is transversely displaceable by hand.

5. Socket according to one of Claims 1 to 4, characterized in that the slide (32, 87) has a hole pattern of openings (38, 38', 38'') corresponding to the hole pattern of the contact carrier (26, 84), which openings align with the openings (34, 36) of the contact carrier (26, 84) in the releasing position (F) of the slide (32, 87), and in that, in the first, blocking position (S), crescent-shaped regions of the slide (32, 87) engage in neck-shaped, smaller-diameter sections (52, 52', 80) of the contacts (40, 40'', 72) and thereby fix the axial position of the latter.

6. Socket according to Claim 5, characterized in that the neck-shaped section (52, 52'', 80) of each contact (40, 40'', 72) is arranged between a sleeve part (42, 82) for accommodating the contact pins of a plug to be plugged into the socket (10, 10') and a conductor connection part (44, 74), and in that the slide (32, 87) is arranged in the contact carrier (26) transversely displaceably by an amount equivalent to the difference between the radii of sleeve part (42, 82) and neck-shaped section (52, 82', 80).

## Revendications

1. Prise de courant pour une connexion multipolaire d'un raccordement électrique de remorque, avec un logement de prise (12) et un porte-contacts (26, 84) logé dans ledit logement de prise, lequel porte-contacts présente des orifices (34, 36, 38, 81) dans lesquels viennent se loger les contacts (40, 40'', 72) de façon imperdable grâce au fait qu'il est prévu sur le porte-contacts (26, 84) une coulisse (32, 87) mobile perpendiculairement à la direction d'introduction des contacts (40, 40'', 72), qui, dans une première position de blocage (S), maintient les contacts (40, 40'', 72) de façon imperdable sur le porte-contacts (26, 84) et qui, dans une seconde position (F) libère les contacts (40, 40'', 72), de telle sorte que ceux-ci peuvent être extraits ou insérés dans les orifices (34, 36, 38) du porte-contacts (26, 84), caractérisée en ce que la coulisse (32) est adaptée au contour interne du logement de prise (12), de telle sorte qu'un porte-contacts (26) ne puisse être inséré dans la prise (10) que lorsque la coulisse (32) est dans sa première position de blocage (S).

2. Prise selon la revendication 1, caractérisée en ce que la coulisse (32) est adaptée au contour interne du logement de prise (12) de telle sorte que la coulisse (32) positionne le porte-contacts (26) avec précision à l'intérieur de la prise (10).

3. Prise selon la revendication 1 ou 2, caractérisée en ce que le porte-contacts (26, 84) se compose de deux parties, et en ce que la coulisse (32, 87) est logée et maintenue entre les deux parties de porte-contacts (28, 30 ; 86, 85) de façon à pouvoir coulisser transversalement.

4. Prise selon l'une des revendications 1 à 3, caractérisée en ce que la coulisse (32) présente une nervure de préhension (62), qui permet de la déplacer transversalement à la main.

5. Prise selon l'une des revendications 1 à 4, caractérisée en ce que la coulisse (32, 87) présente une configuration de trous correspondant à la configuration de trous du porte-contacts (26, 84) au niveau des orifices (38, 38', 38''), qui, dans la position de libération (F) de la coulisse (32, 87) sont alignés avec les orifices (34, 36) du porte-contact (26, 84), et en ce que, dans la première position de blocage (S), des zones de la coulisse (32, 87) en forme de faucille viennent s'engager avec des parties en forme de gorge de plus faible diamètre (52, 52', 80) des contacts (40, 40'', 72), assurant ainsi leur fixation dans la direction axiale.

6. Prise selon la revendication 5, caractérisée en ce que la partie en forme de gorge (52, 52'', 80) de chaque contact (40, 40'', 72) est disposée entre un élément de douille (42, 82) destiné au logement des fiches de contact d'un connecteur à enficher dans la prise (10, 10') et un élément de connexion du conducteur (44, 74), et en ce que la coulisse (32, 87) est disposée de façon à pouvoir se déplacer transversalement dans le porte-contacts (26) d'une distance correspondant à la différence de rayons entre l'élément de douille (42, 82) et la partie en forme de gorge (52, 82', 80).
